# EUROPEAN PATENT SPECIFICATION

(11) **EP 2 551 607 B1**
(45) Date of publication and mention of the grant of the patent: **17.10.2018**
(21) Application number: 12176769.3
(22) Date of filing: 17.07.2012
(51) Int. Cl.: F24F 13/24, F24F 13/30

(54) **Ventilation apparatus**
Lüftungsgerät
appareil de ventilation

(30) Priority: 28.07.2011 KR 20110074998; 14.09.2011 KR 20110092642; 20.09.2011 KR 20110094754
(43) Date of publication of application: 30.01.2013
(73) Proprietor: LG Electronics Inc., Youngdungpo-gu Seoul 150-721 (KR)
(72) Inventor: Ryu, Jeongtae, 641-110 Kyungsangnam-do (KR)
(74) Representative: Vossius & Partner Patentanwälte Rechtsanwälte mbB

(56) References cited:
- EP-A1- 1 361 398
- EP-A1- 1 772 678
- EP-A2- 0 828 118
- WO-A1-2010/149865

## Description

The present invention relates to a ventilation apparatus and, more particularly, to a ventilation apparatus capable of ventilating an indoor area and having a heat exchanger heat-exchanging indoor air and outdoor air.

In general, a ventilation apparatus exhausts indoor air to the outside and supplies outdoor air to an indoor area. A recent ventilation apparatus tends to minimize a heat loss of an indoor area by heat-exchanging indoor air and outdoor air.

A ventilation apparatus may include an exhaust fan for exhausting indoor air to the outside, an air supply fan for supplying outdoor air to an indoor area, and a heat exchanger heat-exchanging indoor air exhausted by the exhaust fan and outdoor air supplied by the air supply fan.

An example of a ventilation apparatus may be, for example, a ceiling-insert type ventilation apparatus which is installed to be buried in a ceiling and connected to an indoor area and an outdoor area by a duct. The ceiling-insert type ventilation apparatus exhausts indoor air through the duct and supplies outdoor air through the duct.

### [Prior art document]

### [Patent document]

KR 10-0684257 (February 16, 2007)

The related art ventilation apparatus is installed in an indoor area and when it directly supplies outdoor air to the indoor area, a single large air supply fan generates a great deal of noise. Meanwhile, if a space for absorbing noise generated from the single large air supply fan is formed, the size of the ventilation apparatus is increased, making it difficult to obtain a compact ventilation apparatus.

EP 0 828 118 relates to a ventilating device for simultaneous aeration and deaeration of spaces, with an equipment for heat recovery from the exhaust flow. Within a casing of the device two separate flow paths are formed and a mechanical ventilation device is provided for each of the intake and the exhaust flow. Further, both in the intake and the exhaust flow filter elements are respectively provided.

EP 1 361 298 discloses an indoor unit for an air conditioner comprising: a casing having an air inlet in a front surface, an upper surface air outlet in an upper surface and a side surface air outlet in a side surface and installed on an indoor floor or in the vicinity of the indoor floor; a fan and a heat exchanger that are disposed in the casing such that the heat exchanger lies on a suction side of the fan; and means for regulating a temperature of either upper outlet air from the upper surface air outlet or side outlet air from the side surface air outlet such that the temperature of the upper outlet air is lower than the temperature of the side outlet air.

EP 1 772 678 is directed to an apparatus for redirecting wind in an air conditioner, the apparatus comprising: a fan motor unit for sucking and discharging exterior air so that the exterior air can be heat-exchanged by a heat exchanger embedded in a cabinet; an air duct embedded in the cabinet so as to form an air passage at the circumference of the fan motor unit, for guiding the air discharge direction; and a drive unit for varying the position of a discharge opening of the air duct.

The objects of the present invention are achieved by the inventions defined in the claims.

According to an aspect of the present invention, there is provided a ventilation apparatus including: a casing having a left indoor air suction hole formed on the left and a right indoor air suction hole formed on the right, an indoor air discharge hole and an outdoor air suction hole formed at a rear side, and an outdoor air discharge hole formed at an upper side; a left heat exchanger for exchanging heat between indoor air and outdoor air installed on the left within the casing, a right heat exchanger for exchanging heat between indoor air and outdoor air installed on the right within the casing; a partition plate partitioning the internal left side and internal right side of the casing into an indoor air exhaust chamber and an outdoor air suction chamber; an exhaust fan disposed in the indoor air exhaust chamber; a left air supply fan disposed in the outdoor air suction chamber and configured to blow outdoor air to the left heat exchanger; and a right air supply fan disposed in the outdoor air suction chamber and configured to blow outdoor air to the right heat exchanger.

The left heat exchanger and the right heat exchanger may have an indoor air flow path allowing indoor air to pass therethrough in a horizontal direction and an outdoor air flow path allowing outdoor air to be sucked to a lower face thereof so as to be discharged to an upper face thereof, respectively.

The left heat exchanger and the right heat exchanger may have an outdoor air suction flow path between the left heat exchanger and the right heat exchanger and a lower plate of the casing.

The ventilation apparatus may further include: a left supporter supporting the left heat exchanger such that the left heat exchanger is separated from the lower plate of the casing; and a right supporter supporting the right heat exchanger such that the right heat exchanger is separated from the lower plate of the casing.

The left supporter and the right supporter may have an opening allowing outdoor air to pass therethrough, respectively.

The ventilation apparatus may further include: a left air supply fan mounter on which the left air supply fan is mounted; and a right air supply fan mounter on which the right air supply fan is mounted.

The left air supply fan mounter and the right air supply fan mounter may be vertically installed within the casing and have an opening allowing outdoor air to pass therethrough, respectively.

The left air supply fan and the right air supply fan may be separately installed.

The left air supply fan and the right air supply fan may include a fan housing, a blower rotatably placed within the fan housing, and a motor installed at the fan housing and configured to rotate the blower, and the fan housing may be configured to suck outdoor air from front and rear faces thereof and have an air discharge hole formed on a circumferential portion thereof.

The fan housing of the left air supply fan and that of the right air supply fan may have the same shape, the air discharge hole of the fan housing of the left air supply fan may be installed to discharge air to the left side, and the air discharge hole of the fan housing of the right air supply fan may be installed to discharge air to the right side.

The motor of the fan housing of the left air supply fan may be installed on one of the front and rear faces, and the motor of the fan housing of the right air supply fan may be installed on the opposite side of the motor of the air supply fan.

The partition plate may include: a horizontal plate placed between the left heat exchanger and the right heat exchanger; a left sloped plate disposed to be sloped toward a lower end of the left heat exchanger from the horizontal plate; and a right sloped plate disposed to be sloped toward a lower end of the right heat exchanger from the horizontal plate.

The casing may include a top cover having a left outdoor air discharge hole formed at an upper side of the left heat exchanger and a right outdoor air discharge hole formed at an upper side of the right heat exchanger. The exhaust fan may include air suction holes formed at both of left and right faces thereof and an air discharge hole formed at a rear side thereof. The control unit configured to control the ventilation apparatus may be placed between the exhaust fan and the top cover.

The ventilation apparatus may further include a shielding member preventing outdoor air discharged to an upper side of the left heat exchanger and the right heat exchanger from flowing backward to the exhaust fan.

The shielding member may include a control unit accommodation portion for accommodating the control unit.

According to embodiments of the present invention, compared with a case in which outdoor air is blown to a left heat exchanger and a right heat exchanger by a single large air supply fan, generation of noise can be reduced.

Also, since a flow path of outdoor air and a flow path of indoor air are simplified, generation of noise can be minimized and efficiency can be enhanced.

The above and other objects and features of the present invention will become apparent from the following description of preferred embodiments given in conjunction with the accompanying drawings, in which:
FIG. 1 is a perspective view of a ventilation apparatus according to a first embodiment of the present invention;
FIG. 2 is an exploded perspective view of the ventilation apparatus according to the first embodiment of the present invention;
FIG. 3 is a front view showing the interior of the ventilation apparatus according to the first embodiment of the present invention;
FIG. 4 is a rear view of the ventilation apparatus according to the first embodiment of the present invention;
FIG. 5 is a plan view showing an air supply fan of the ventilation apparatus according to the first embodiment of the present invention;
FIG. 6 is a cross-sectional view showing a controller unit of the ventilation apparatus according to the first embodiment of the present invention;
FIG. 7 is an exploded perspective view of a ventilation apparatus according to a second embodiment of the present invention;
FIG. 8 is an exploded perspective view of the ventilation apparatus according to a third embodiment of the present invention; and
FIG. 9 is a front view showing the interior of the ventilation apparatus according to a fourth embodiment of the present invention.

Embodiments of the present invention will be described in detail with reference to the accompanying drawings.

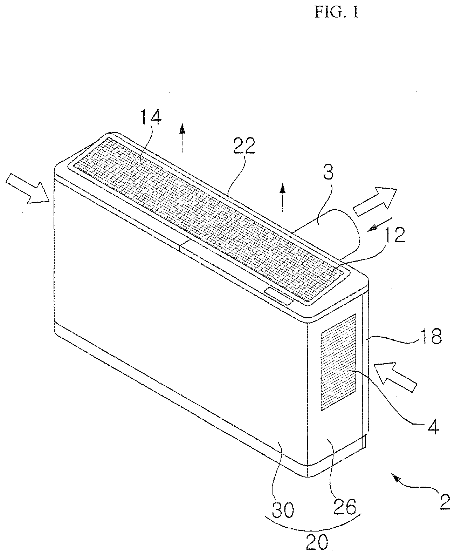

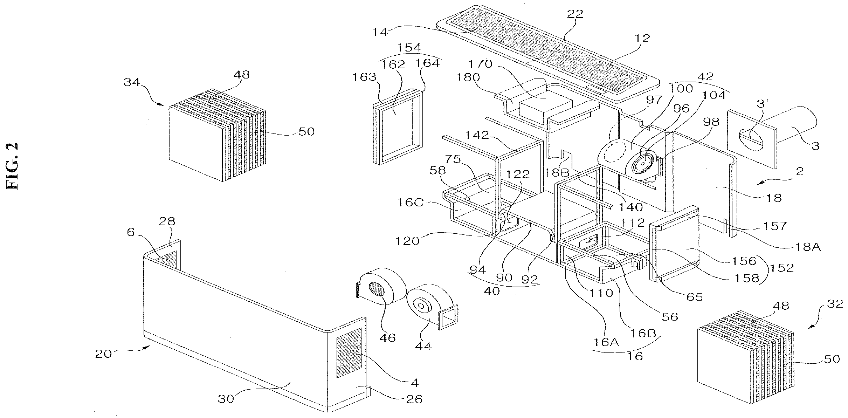

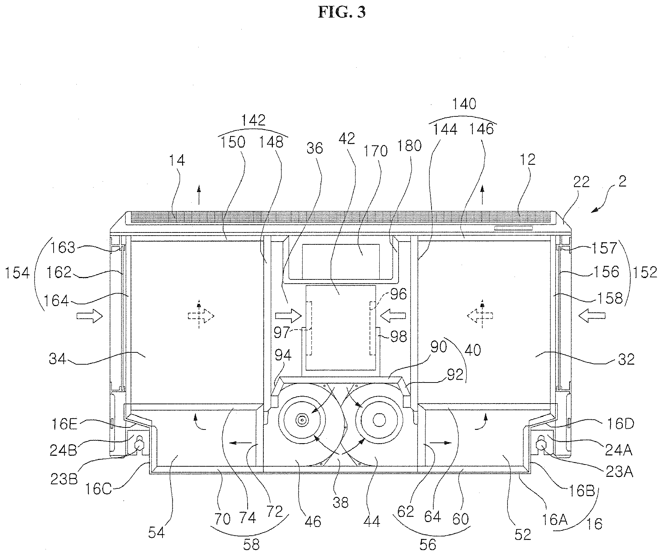

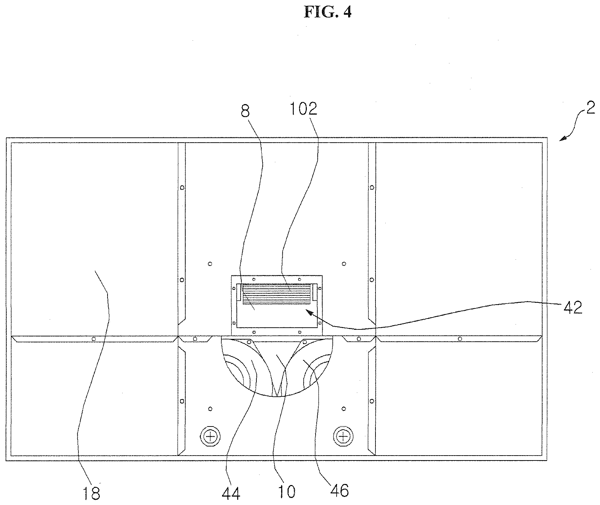

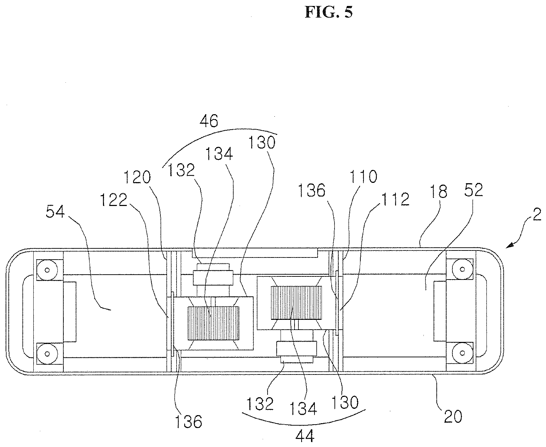

FIG. 1 is a perspective view of a ventilation apparatus according to a first embodiment of the present invention. FIG. 2 is an exploded perspective view of the ventilation apparatus according to the first embodiment of the present invention. FIG. 3 is a front view showing the interior of the ventilation apparatus according to the first embodiment of the present invention. FIG. 4 is a rear view of the ventilation apparatus according to the first embodiment of the present invention. FIG. 5 is a plan view showing an air supply fan of the ventilation apparatus according to the first embodiment of the present invention;

A ventilation apparatus according to the first embodiment of the present invention includes a casing 2 forming an external appearance thereof.

The ventilation apparatus may be installed to be stood in an indoor area desired to be ventilated, and the casing 2 may be connected to an outdoor area by an air intake and exhaust duct 3. The ventilation apparatus may directly suck indoor air in an indoor area and discharge it to an outdoor area through the air intake and exhaust duct 3. The ventilation apparatus may suck outdoor area through the air intake and exhaust duct 3 and directly discharge it to an indoor area.

The air intake and exhaust duct 3 may ventilate the interior of the casing 2 and the outer side. The air intake and exhaust duct 3 may be installed to penetrate the wall of a building. The air intake and exhaust duct 3 may include a partition plate 3' therein to partition an air intake passage for sucking outdoor air and an air exhaust passage for exhausting indoor air.

The ventilation apparatus may suck indoor air from left and right sides thereof and discharge outdoor air to an upper side thereof.

The casing 2 may include a left indoor air suction hole 4 formed on a left side thereof. The casing 2 may include a right indoor air suction hole 6 formed on a right side thereof. The casing 2 may include an indoor air discharge hole 8 and an outdoor air suction hole 10 formed on a rear side thereof. The casing may include outdoor air discharge holes 12 and 14 formed on an upper side thereof.

The casing may include a base 16, a rear panel 18, a front panel 20, and a top cover 22.

The casing 2 may be fixed to the wall of an indoor area to be ventilated by the ventilation apparatus by fixing members 23A and 23B such as bolts, or the like. Fixing member fastening units 24a and 24B may be formed on left and right lower portions of the casing 2 to which the fixing members 23A and 23B are fixedly fastened, respectively. The fixing members 23A and 23B may be formed extendedly in a forward/backward direction. The fixing members 23A and 23B may include a head portion caught by a front end portion in a forward/backward direction with the fixing member fastening units 24A and 24B, respectively. The fixing members 23A and 23B may be disposed to penetrate the fixing member fastening unit 24A and 24B. A rear portion of the fixing members 23A and 23B may be insertedly fixed in an indoor wall. The fixing members 23A and 23B may be fastened to the fixing member fastening units 24A and 24B by a fixing member holder such as a nut, or the like. The fixing member fastening units 24A and 24B may include a through portion the fixing members 23A and 23B penetrate. The fixing member fastening units 24A and 24B may be disposed at left and right sides of at least one of the base 16 and the rear panel 18. The fixing members 23A and 23B may include a left fixing member 23A fixing the left side of the casing 2 and a right fixing member 23B fixing the right side of the casing 2. The fixing member fastening units 24A and 24B may include a left fixing member fastening unit 24A to which the left fixing member 23A is fastened and a right fixing member fastening unit 24B to which the right fixing member 23B is fastened.

The base 16 may form a lower external appearance of the ventilation apparatus. The base 16 may form the lower external appearance of the ventilation apparatus. The base 16 may include a lower plate 16A, a left plate 16B disposed to be upwardly protruded from a left side of the lower plate 16A, and a right plate 16C disposed to be upwardly protruded from a right side of the lower plate 16A. The lower plate 16A of the base 16 may make a lower plate of the casing 2. The base 16 may include a left sloped plate 16D upwardly sloped from an upper end of the left plate 16B in a leftward direction and a right sloped plate 16E upwardly sloped from an upper end of the right plate 16C in a rightward direction. The distance between the left plate 16B and the right plate 16C of the base 16 may be shorter than the distance between the left fixing member fastening unit 24A and the right fixing member fastening unit 24B. The left fixing member 23A may be inserted into a space between the left plate 16B and the left sloped plate 16D of the base 16 so as to be fastened to the left fixing member fastening unit 24A. The right fixing member 23B may be inserted into a space between the right plate 16C and the right sloped plate 16E of the base 16 so as to be fastened to the right fixing member fastening unit 24B. Namely, the left fixing member 23A and the right fixing member 23B may be fastened to a wall from an outer position of the base 16.

The rear panel 18 may form a rear external appearance of the ventilation apparatus. The real panel 18 may be vertically installed. On the rear panel 18, the indoor air discharge hole 8 and the outdoor air suction hole 10 may be formed in a forward/backward direction. As shown in FIG. 4, the indoor air discharge hole 8 and the outdoor air suction hole 10 may be formed to be spaced apart up and down on the rear panel 18. The indoor air discharge hole 8 may be placed at an upper side of the outdoor air suction hole 10. The air intake and exhaust duct 3 may be connected to the rear panel 18. An exhaust passage formed at an upper portion within the air intake and exhaust duct 3 may be connected with the indoor air discharge hole 8, and an air supply passage formed at a lower portion within the air intake and exhaust duct 3 may be installed to communicate with the outdoor air suction hole 10. The rear panel 18 may include a left fixing member through hole 18A that the left fixing member 23A penetrates and a right fixing member through hole 18B that the right fixing member 23B penetrates.

The front panel 20 may form a front external appearance of the ventilation apparatus. The front panel 20 may be vertically installed. The casing 2 may include lateral plates 26 and 28 forming a lateral external appearance of the ventilation apparatus. The lateral plates 26 and 28 may be integrally formed with one of the rear panel 18 and the front panel 20. The lateral plates 26 and 28 may be separately formed from the rear panel 18 and the front panel 20 and coupled to at least one of the rear panel 18 and the front panel 20. When the lateral plates 26 and 28 are integrally bent from both sides of the front panel 20, a gap at a front side of the casing 2 can be minimized, and hereinafter, the lateral plats 26 and 28 are integrally formed with the front panel 20. The front panel 20 may include a left plate 26 with the left indoor air suction hole 4 formed thereon, the right plate 28 with the right indoor air suction hole 6 formed thereon, and a front plate 30 between a front end of the left plate 26 and that of the right plate 28.

The top cover 22 may form an upper external appearance of the ventilation apparatus. The top cover 22 may be horizontally or slopingly installed at an upper portion of the rear panel 18 and the front panel 20. The top cover 22 may include a plurality of outdoor air discharge holes 12 and 14 formed to be spaced apart in a horizontal direction thereon. The top cover 22 may be formed such that the left outdoor air discharge hole 12 discharges air in an upward direction or in an upward front direction. The top cover 22 may be formed such that the right outdoor air discharge hole 14 discharges air in an upward direction or in an upward front direction. The top cover 22 may be formed such that the left outdoor air discharge hole 12 and the right outdoor air discharge hole 14 are stopped therebetween in a vertical direction. The left outdoor air discharge hole 12 may be formed to be placed at an upper portion of a left heat exchanger 32 (to be described) and the right outdoor air discharge hole 14 may be formed to be placed at an upper portion of a right heat exchanger 34. The top cover 22 may have a grill region formed to extend in a horizontal direction thereon. The grill region of the top cover 22 may include the left outdoor air discharge hole 12 formed at a left portion thereof and the right outdoor air discharge hole 14 formed at a right portion thereof. The top cover 22 may be formed such that the left outdoor air discharge hole 12 and the right outdoor air discharge hole 14 of the grill region are stopped therebetween in a vertical direction.

The ventilation apparatus may include the left heat exchanger 32 installed at the left within the casing 2, and the right heat exchanger 34 installed at the right within the casing 2. The ventilation apparatus may include a partition plate 40 partitioning an inner left side and an inner right side of the casing 2 into an indoor air exhaust chamber 36 and an outdoor air suction chamber 38. The ventilation apparatus may include an exhaust fan 42 disposed in the indoor air exhaust chamber 36. The ventilation apparatus may include a left air supply fan 44 disposed in the outdoor air suction chamber 38 and blowing outdoor air to the left heat exchanger 32 and a right air supply fan 46 disposed in the outdoor air suction chamber 38 and blowing outdoor air to the right heat exchanger 34.

The left heat exchanger 32 and the right heat exchanger 34 may heat-exchange outdoor air and indoor air, respectively.

The left heat exchanger 32 and the right heat exchanger 34 may include an outdoor air flow path 48 allowing outdoor to be sucked from a lower face thereof and discharged from an upper face thereof and an indoor air flow path 50 allowing indoor air to pass therethrough in a horizontal direction, respectively.

The left heat exchanger 32 may have the indoor air flow path 50 allowing indoor air to be sucked from a left face thereof and discharged from a right face thereof. The right heat exchanger 34 may have the indoor air flow path 50 allowing indoor air to be sucked from a right face thereof and discharged from a left face thereof.

The left heat exchanger 32 and the right heat exchanger 34 may include a front shielding member disposed on a front face thereof and a rear shielding member disposed on a rear face thereof, respectively. A heat transmission member may be disposed between the front shielding member and the rear shielding member to allow outdoor air and indoor air to transfer heat, while partitioning the outdoor air flow path 48 and the indoor air flow path 50.

In the left heat exchanger 32 and the right heat exchanger 34, the outdoor air flow path and the indoor air flow path 50 may be alternately formed in a forward/backward direction, respectively.

Left and right faces of the outdoor air flow path 48 may be closed and upper and lower faces of the outdoor air flow path 48 may be open. The upper face and the lower face of the outdoor air flow path 48 may be open therebetween.

Upper and lower faces of the indoor air flow path 50 may be closed and left and right faces of the indoor air flow path 50 may be open. The left face and the right face of the indoor air flow path 50 may be open therebetween.

The left heat exchanger 32 and the right heat exchanger 34 may be installed to have outdoor air suction flow paths 52 and 54 between the left heat exchanger 32 and the right heat exchanger 34 and the lower plate 16A of the casing 2, respectively. Hereinafter, the outdoor air suction flow path placed at a lower side of the left heat exchanger 32 will be referred to as a left outdoor air suction flow path 52, and the outdoor air suction flow path placed at a lower side of the right heat exchanger 34 will be referred to as a right outdoor air suction flow path 54, for the sake of brevity.

The ventilation apparatus may further include a left supporter 56 supporting the left heat exchanger 32 such that the left heat exchanger 32 is separated from the lower plate 16A of the casing 2, and a right supporter 58 supporting the right heat exchanger 34 such that the right heat exchanger 34 is separated from the lower plate 16A of the casing 2.

The left supporter 56 may include a left lower frame 60 disposed on the lower plate 16A of the casing 2, a left vertical frame 62 disposed to be perpendicular to the left lower frame 60, and a left upper frame 64 horizontally disposed at an upper portion of the left vertical frame 62.

The left heat exchanger 32 may be supported mounted on the left upper frame 64 of the left supporter 56. A left opening 65 is formed in a vertical direction to allow air blown from the left air supply fan 44 to pass therethrough to flow to the lower face of the left heat exchanger 32.

The right support 58 may include a right lower frame 70 disposed on the lower plate 16A of the casing 2, a right vertical frame 72 disposed to be perpendicular to the right lower frame 70, and a right upper frame 74 horizontally disposed at an upper portion of the right vertical frame 72.

The right heat exchanger 34 may be supported mounted on the right upper frame 74 of the right supporter 58. A right opening 75 is formed in a vertical direction to allow air blown from the right air supply fan 46 to pass therethrough to flow to the lower face of the right heat exchanger 34.

The partition plate 40 may be a shielding member preventing indoor air sucked from the indoor area and outdoor air sucked from an outdoor area from being mixed. The partition plate 40 may form the outdoor air suction chamber 38 between the partition plate 40 and the lower plate 16A of the casing 2, and may form the indoor air exhaust chamber 36 at an upper side thereof. An upper face of the partition plate 40 may form a flow path of indoor air, and a lower face of the partition plate 40 may form a flow path of outdoor air. Preferably, the partition plate 40 may be formed to secure an installation space of the left air supply fan 44 and the right air supply fan 46 while maximizing the height of the left heat exchanger 32 and the right heat exchanger 34.

Preferably, the partition plate 40 includes a horizontal plate 90, a left sloped plate 92, and a right sloped plate 94. The horizontal plate 90 may be placed between the left heat exchanger 32 and the right heat exchanger 34. The left sloped plate 92 may be formed to be sloped toward a lower end of the left heat exchanger 32 from a left end of the horizontal plate 90. The right sloped plate 94 may be formed to be sloped toward a lower end of the right heat exchanger 34 from a left end of the horizontal plate 90. The left sloped plate 92 and the right sloped plate 94 may be disposed to be sloped toward the exhaust fan 42. The left sloped plate 92 and the right sloped plate 94 may serve as guides guiding indoor air, which has passed through the left heat exchanger 32 and the right heat exchanger 34, to the exhaust fan 42.

As shown in FIGS. 2 and 4, the exhaust fan 42 may include suction holes 96 and 97 formed on left and right faces thereof and an air discharge hole 98 formed at a rear portion thereof. Namely, the exhaust fan 42 may suck air from left and right faces thereof and blow it in a backward direction.

As shown in FIGS. 2 to 4, the exhaust fan 42 may include a fan housing 100 having the indoor air suction holes 96 and 97 and the indoor air discharge hole 98, a blower 102 plated within the fan housing 100, and a motor 104 connected with a rotational shaft of the blower 102 to rotate the blower 102.

The exhaust fan 42 may form an exhaust flow path along which indoor air passes through the left heat exchanger 32 and the right heat exchanger 34 and then is discharged to the indoor air discharge hole 8.

The fan housing 100 of the exhaust fan 42 may be installed on the rear panel 18. The air suction hole 96 formed on a left face of the fan housing 100 of the exhaust fan 42 may face the left heat exchanger 32. The air suction hole 97 formed on a right face of the fan housing 100 of the exhaust fan 42 may face the right heat exchanger 34. The air discharge hole 98 of the fan housing 100 of the exhaust fan 42 may be disposed to communicate with the indoor air discharge hole 8 of the casing 2.

In the ventilation apparatus, noise generated from the exhaust fan 42 may be transferred to an outdoor area through the indoor air discharge hole 8. Noise transferred to an outdoor area from the exhaust fan 42 does not greatly affect the indoor area in which the ventilation apparatus is installed. Unlike the left and right air supply fans 44 and 46, preferably, the single exhaust fan 42 is installed in consideration of the number of components and an assembling process of the ventilation apparatus.

Meanwhile, noise generated from the left and right air supply fans 44 and 46 may be transferred to the indoor area through the left outdoor air discharge hole 12 and the right outdoor air discharge hole 14. If only a single large air supply fan, instead of the left and right air supply fans 44 and 46, is installed, greater noise would be generated from the single large air supply fan. Therefore, it is more desirous to install the left and right air supply fans 44 and 46 than to install a single large air supply fan.

Namely, the left air supply fan 44 and the right air supply fan 46 generates smaller noise when driven in comparison to a single large air supply fan, and noise transferred to the indoor area through the left outdoor air discharge hole 12 and the right outdoor air discharge hole 14 after being generated by the left air supply fan 44 and the right air supply fan 46 can be minimized.

Meanwhile, the left air supply fan 44 and the right air supply fan 46 may form a distributed air supply flow path along which outdoor air is sucked into the outdoor air suction chamber 38 and then distributedly blown to the left heat exchanger 32 and the right heat exchanger 34.

The left air supply fan 44 may be installed to blow outdoor air toward the outdoor air suction flow path 52 between the left heat exchanger and the lower plate 16A of the casing 2.

The right air supply fan 46 may be installed to blow outdoor air toward the outdoor air suction flow path 52 between the left heat exchanger and the lower plate 16A of the casing 2.

The ventilation apparatus may further include a left air supply fan mounter 110 on which the left air supply fan 44 is mounted and a right air supply fan mounter 120 on which the right air supply fan 46 is mounted.

The left air supply fan mounter 110 and the right air supply fan mounter 120 may be vertically installed within the casing 2, respectively. The left air supply fan mounter 110 and the right air supply fan mounter 120 may have openings 112 and 122 formed in a horizontal direction to allow outdoor air to pass therethrough.

The left air supply fan mounter 110 may be coupled to the left supporter 56. The left outdoor air suction flow path 52 may be formed between the lower plate 16A of the base 16 and the left plate 16B of the base 16 and the lower face of the left heat exchanger 32 and the left air supply fan mounter 110. The opening 112 may be formed to communicate with the left outdoor air suction flow path 52.

The right air supply fan mounter 120 may be coupled to the right supporter 58. The right outdoor air suction flow path 54 may be formed between the lower plate 16A of the base 16 and the right plate 16C of the base 16 and the lower face of the right heat exchanger 34 and the right air supply fan mounter 120. The opening 122 may be formed to communicate with the right outdoor air suction flow path 54.

The left air supply fan 44 and the right air supply fan 46 may be separately installed. The left air supply fan 44 and the right air supply fan may not be mechanically connected and may be driven independently.

The left air supply fan 44 and the right air supply fan 46 may include a fan housing 130, a blower 134 rotatably placed within the fan housing 130, and a motor 132 installed at the fan housing 130 to rotate the blower 134.

The fan housing 130 may have air suction holes formed on a front face and a rear face to allow outdoor air to be sucked into the fan housing 130 therethrough. The fan housing 130 may have an air discharge hole 136 formed on a circumferential portion thereof to discharge outdoor air. The air discharge hole 136 may be formed to be protruded in a lateral direction from the circumferential portion, excluding the front face and the rear face of the fan housing 130.

The fan housing 130, the motor 132, and the blower 134 of the left air supply fan 44 and the right air supply fan 46 may have the same structure. The left air supply fan 44 and the right air supply fan 46 may discharge air to the left or to the right according to a direction in which air is charged from the air discharge hole 136.

The left air supply fan 44 and the right air supply fan 46 may be installed to discharge in the mutually opposite directions. The left air supply fan 44 may be installed to discharge air in a leftward direction. The right air supply fan 46 may be installed to discharge air in a rightward direction.

The fan housings 130 of the left air supply fan 44 and the right air supply fan 46 may have the same shape, and the fan housings 130 may be installed such that discharge directions of the air discharge holes 136 are the mutually opposite directions.

The fan housing 130 of the left air supply fan 44 may be installed such that the air discharge hole 136 is installed to be protruded in the leftward direction. The fan housing 130 of the right air supply fan 46 may be installed such that the air discharge hole 136 is installed to be protruded in the rightward direction.

The motor 132 of the left air supply fan 44 may be installed on one of the front and rear faces of the fan housing 130 of the left air supply fan 44. The motor 132 of the right air supply fan 46 may be installed on the opposite face of the motor 132 of the left air supply fan 44 among the front and rear faces of the fan housing 130 of the right air supply fan 46.

For example, when the motor 132 of the left air supply fan 44 is installed on the front face of the fan housing 130 of the left air supply fan 44 and the air discharge hole 136 formed on the fan housing 130 of the left air supply fan 44 discharges air in the leftward direction, the motor 132 of the right air supply fan 46 may be installed on the rear face of the fan housing 130 of the right air supply fan 46 and the air discharge hole 136 formed on the fan housing 130 of the right air supply fan 46 may discharge air in the rightward direction.

Conversely, when the motor 132 of the left air supply fan 44 is installed on the rear face of the fan housing 130 of the left air supply fan 44 and the air discharge hole 136 formed on the fan housing 130 of the left air supply fan 44 discharges air in the leftward direction, the motor 132 of the right air supply fan 46 may be installed on the front face of the fan housing 130 of the right air supply fan 46 and the air discharge hole 136 formed on the fan housing 130 of the right air supply fan 46 may discharge air in the rightward direction.

Namely, the left air supply fan 44 and the right air supply fan 46 may be commonly installed to serve.

The ventilation apparatus may further include a left heat exchanger holder 140 fixing the left heat exchanger 32 and a right heat exchanger holder 142 fixing the right heat exchanger 34.

The left heat exchanger holder 140 may be installed at an upper side of the left supporter 56. The right heat exchanger holder 142 may be installed at an upper side of the right supporter 58.

The left heat exchanger holder 140 may include a left vertical frame 144 connected to an upper portion of the left supporter 56 and vertically disposed and a left horizontal frame 146 horizontally disposed at an upper side of the left vertical frame 144.

The right heat exchanger holder 142 may include a right vertical frame 148 connected to an upper portion of the right supporter 58 and vertically disposed and a right horizontal frame 150 horizontally disposed at an upper side of the right vertical frame 148.

A left end of the partition plate 40 may be connected to the left heat exchanger 32 through at least one of the left supporter 56, the left air supply fan mounter 110, and the left heat exchanger holder 140. A right end of the partition plate 40 may be connected to the right heat exchanger 34 through at least one of the right supporter 58, the right air supply fan mounter 120, and the right heat exchanger holder 142.

The ventilation apparatus may include a left filter unit 152 purifying indoor air sucked to the left heat exchanger 32 and a right filter unit 154 purifying indoor air sucked to the right heat exchanger 34.

The left filter unit 152 may include a left filter 156 allowing indoor air to be purified while passing therethrough and a left filter frame 158 having a sliding guide 157 to or from which the left filter 156 is slidably attached or detached forwardly and backwardly.

The left filter frame 158 of the left filter unit 152 may connect the left supporter 56 and the left heat exchanger holder 140 to fix the left heat exchanger 32 along with the left supporter 56 and the left heat exchanger holder 140.

The right filter unit 154 may include a right filter 162 allowing indoor air to be purified while passing therethrough and a right filter frame 164 having a sliding guide 163 to or from which the right filter 162 is slidably attached or detached forwardly and backwardly.

The right filter frame 164 of the right filter unit 154 may connect the right supporter 58 and the right heat exchanger holder 142 to fix the right heat exchanger 34 along with the right supporter 58 and the right heat exchanger holder 142.

Namely, the left heat exchanger 32 may be mounted on the left supporter 56 and supported by the left heat exchanger holder 140 and the left filter unit 152, thus being limited in a movement thereof, and the right heat exchanger 34 may be mounted on the right supporter 58 and supported by the right heat exchanger holder 142 and the right filter unit 154, thus being limited in a movement thereof.

The ventilation apparatus may include a control unit 170 for controlling the ventilation apparatus. The control unit 170 may be installed to be placed between the exhaust fan 42 and the top cover 22.

The ventilation apparatus may include a shielding member 180 preventing outdoor air discharged to an upper side of the left heat exchanger 32 and the right heat exchanger 34 from flowing back to the exhaust fan 42 when the exhaust fan 42, the left air supply fan 44, and the right air supply fan 46 are driven. The shielding member 180 is an outdoor air reverse current preventing member positioned between the exhaust fan 42 and the top cover 22. The shielding member 180 may connect the left heat exchanger holder 140 and the right heat exchanger holder 142 and enhance the strength of the left heat exchanger holder 140 and the right heat exchanger 142. A left side of the shielding member 180 may be coupled to the left heat exchanger holder 140, and a right side of the shielding member 180 may be coupled to the right heat exchanger holder 142.

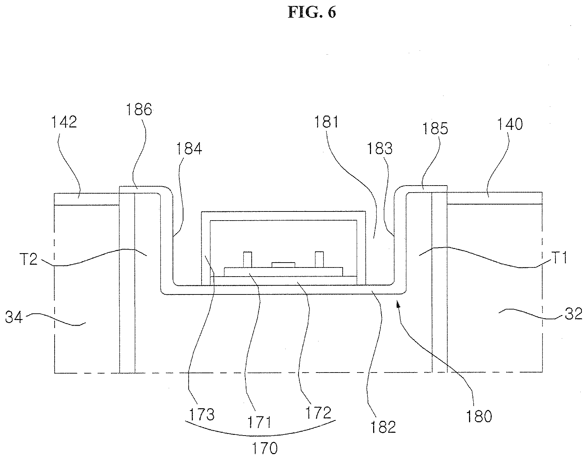

FIG. 6 is a cross-sectional view showing the controller unit of the ventilation apparatus according to the first embodiment of the present invention.

The control unit 170 may include a PCB 171, a PCB case 172 on which the PCB 171 is mounted, and a PCB cover 173 covering the PC 171 and the PCB case 172.

Various electronic components controlling the ventilation apparatus may be installed on the PCB 171.

The PCB case 172 may be mounted on the shielding member 180. The PCB case 172 may prevent the PCB 171 from being in direct contact with the shielding member 180 and insulating the PCB 171. The PCB case 172 may be molded with an insulating material such as plastic, or the like.

The PCB cover 173 may protect the PCB 171 and the PCB case 172. The PCB cover 173 may be molded with an insulating material such as plastic, or the like.

Preferably, the shielding member 180 is made of a metallic material in consideration of strength and fire. The PCB 171 may be installed not to be in direct contact with the shielding member 180 and installed with the PCB case 172 interposed therebetween.

A control unit accommodation portion 181 may be formed in the shielding member 180, and the control unit 170 is accommodated therein. The control unit 170 may be inserted in the control unit accommodation portion 181 and protected by the shielding member 180. A front side of the control unit accommodation portion 181 may be open. The control unit 170 may be provided in a state in which the shielding member 180 is not separated from the left heat exchanger holder 140 and the right heat exchanger holder 142. The shielding member 180 may include a lower plate 182 on which the control unit 170 is mounted, a left plate 183 formed on the left of the lower plate 182 and separated from the left heat exchanger 32, and a right plate 184 formed on the right of the lower plate 182 and separated from the right heat exchanger 34.

The control unit 170 may be disposed between the left plate 183 and the right plate 184 of the shielding member 180.

The left plate 183 of the shielding member 180 may be separated from the left heat exchanger 32 in consideration of fire of the control unit 170. The right plate 184 of the shielding member 18.0 may be separated from the right heat exchanger 34. The shielding member 180 may have a left gap T1 between the left plate 183 and the left heat exchanger 32. The shielding member 10 may have a right gap T2 between the right plate 184 and the right heat exchanger 34.

The shielding member 180 may further include a left upper plate 185 formed at an upper side of the left plate 183 and connected to an upper portion of the left heat exchanger holder 140. The shielding member 180 may further include a right upper plate 186 formed at an upper side of the right plate 184 and connected to an upper portion of the right heat exchanger holder 142.

The operation of the ventilation apparatus configured as described above is as follows.

First, when the left air supply fan 44 and the right air supply fan 46 are driven, outdoor air is sucked to the outdoor air suction chamber 38 through the outdoor air suction hole 10. The outdoor air sucked into the outdoor air suction chamber 38 is distributed to the left air supply fan 44 and the right air supply fan 46 so as to be sucked into the left air supply fan 44 and the right air supply fan 46.

The outdoor air sucked into the left air supply fan 44 is changed in its flow direction to the leftward direction of the left air supply fan-44 so as to be discharged from the left outdoor air suction flow path 52 at the lower side of the left heat exchanger 32, and thereafter, the air is changed in its flow direction to an upward side in the left outdoor air suction flow path 52 so as to be sucked to the lower face of the left heat exchanger 32. The outdoor air sucked to the lower face of the left heat exchanger 32 is heat-exchanged with indoor air passing along the indoor air flow path 50 through the outdoor air flow path 48, and then, discharged to the upper face of the left heat exchanger 34. The outdoor air discharged from the upper face of the left heat exchanger 34 is directly discharged to the indoor area through the left outdoor air discharge hole 12 of the casing 2.

The outdoor air sucked into the left air supply fan 44 is changed in its flow direction to the leftward direction of the left air supply fan 44 so as to be discharged from the left outdoor air suction flow path 52 at the lower side of the left heat exchanger 32, and thereafter, the air is changed in its flow direction to an upward side in the left outdoor air suction flow path 52 so as to be sucked to the lower face of the left heat exchanger 32. The outdoor air sucked to the lower face of the left heat exchanger 32 is heat-exchanged with indoor air passing along the indoor air flow path 50 through the outdoor air flow path 48, and then, discharged to the upper face of the left heat exchanger 34. The outdoor air discharged from the upper face of the left heat exchanger 34 is directly discharged to the indoor area through the left outdoor air discharge hole 12 of the casing 2.

Namely, the outdoor air sucked into the outdoor air suction chamber 38 is distributed to the left and right in the outdoor air suction chamber 38, changed in the flow direction to the horizontal direction one time, and then, changed into the vertical direction one time (changing a total of two times), so as to be discharged into the indoor area.

Meanwhile, when the exhaust fan 42 is driven, the indoor air is sucked to the left indoor air suction hole 4 and the right indoor air suction hole 6.

The indoor air sucked through the left indoor air suction hole 4 passes through the left filter 156 so as to be purified, and then, is sucked to the left face of the left heat exchanger 32. The indoor air sucked to the left face of the left heat exchanger 32 passes through the indoor air flow path 50 so as to be heat-exchanged with outdoor air of the outdoor air flow path 48, and thereafter, it is sucked into the indoor air exhaust chamber 36 through the right face of the left heat exchanger 32, sucked into the exhaust fan 42, and then, is discharged through the indoor air discharge hole 8.

The indoor air sucked through the right indoor air suction hole 6 passes through the right filter 162 so as to be purified, and then, is sucked to the right face of the right heat exchanger 34. The indoor air sucked to the right face of the right heat exchanger 34 passes through the indoor air flow path 50 so as to be heat-exchanged with outdoor air of the outdoor air flow path 48, and thereafter, it is sucked into the indoor air exhaust chamber 36 through the left face of the right heat exchanger 34, sucked into the exhaust fan 42, and then, is discharged through the indoor air discharge hole 8.

Meanwhile, when the ventilation apparatus is operated, noise generated from the left air supply fan 44 and the right air supply fan 46 may be transferred to the outside through the left outdoor air discharge hole 12 and the right outdoor air discharge hole 14, and in this case, since two left and right air supply fans 44 and 46, rather than a single large air supply fan, are installed, less noise is generated when driven and noise transferred to the outside through the left outdoor air discharge hole 12 and the right outdoor air discharge hole 14 can be minimized.

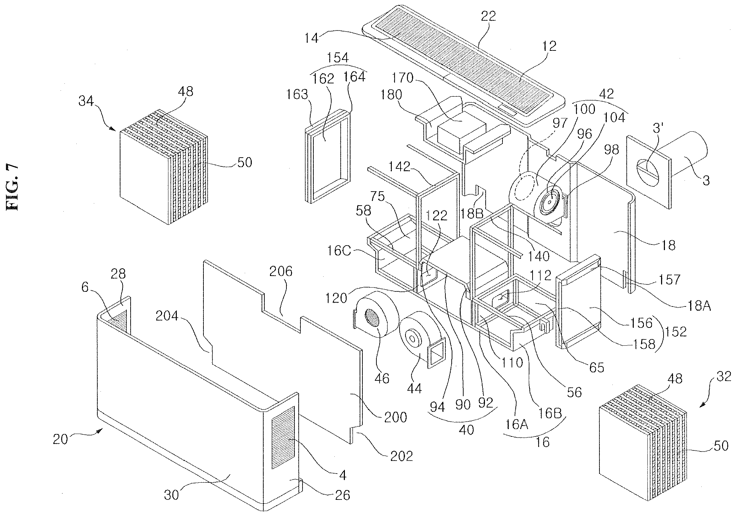

FIG. 7 is an exploded perspective view of a ventilation apparatus according to a second embodiment of the present invention;

The ventilation apparatus according to the second embodiment of the present invention may include a service cover 200, and the service cover 200 may cover the front sides of the left heat exchanger 32, the right heat exchanger 34; the exhaust fan 42, the left air supply fan 44, and the right air supply fan 46.

The service cover 200 may be installed to prevent the left heat exchanger 32, the right heat exchanger 34, the exhaust fan 42, the left air supply fan 44, and the right air supply fan 46 from being exposed when the front panel 20 is externally separated.

The service cover 200 may hermetically close the front side of the left heat exchanger 32, the front side of the right heat exchanger 34, and the front side of the indoor air exhaust chamber 36 to prevent indoor air from being exhausted to an outdoor area after being sucked into the indoor air exhaust chamber 36, rather than passing through the left heat exchanger 32 and the right heat exchanger 34.

The service cover 200 may hermetically close the front side of the outdoor air suction chamber 38, the front side of the left outdoor air suction flow path 52, the front side of the right outdoor air suction flow path 54, the front side of the left heat exchanger 32, and the front side of the right heat exchanger 34 to prevent outdoor air sucked into the outdoor air suction chamber 38 from being supplied to the indoor area through the outdoor air discharge holes 12 and 14, rather than passing through the left heat exchanger 32 and the right heat exchanger 34.

The service cover 200 may be installed not to cover the front sides of the left and right filters 156 and 162. An operator may detachably attach the left and right filters 156 and 162 to the left and right filter frames 158 and 164, without separating the service cover 200.

The service cover 200 may be formed such that a horizontal width thereof is shorter than a distance between the left filter 156 installed on the left filter frame 158 and the right filter 162 installed on the right filter frame 164.

When the front panel 20 is separated, the service cover 200, the left filter 156, and the right filter 162 of the ventilation apparatus may be exposed to the outside. The operator can forwardly draw out the left filter 156 from the left side of the service cover 200 without having to separate the service cover 200. The operator can forwardly draw out the right filter 162 from the right side of the service cover 200.

The service cover 200 may include a left lower evasion recess 202 formed at a left lower portion thereof to allow the left fixing member 23A to be fastened or separated without separating the service cover 200. The service cover 200 may include a right lower evasion recess 204 formed at a right lower portion thereof to allow the right fixing member 23B to be fastened or separated without separating the service cover 200.

The control unit 170 may be installed to be placed between the exhaust fan 42 and the top cover 22, and the service cover 200 may include a control unit evasion recess 206 formed at a front position of the control unit 170 in order to provide the control unit 170 without separating the service cover 200.

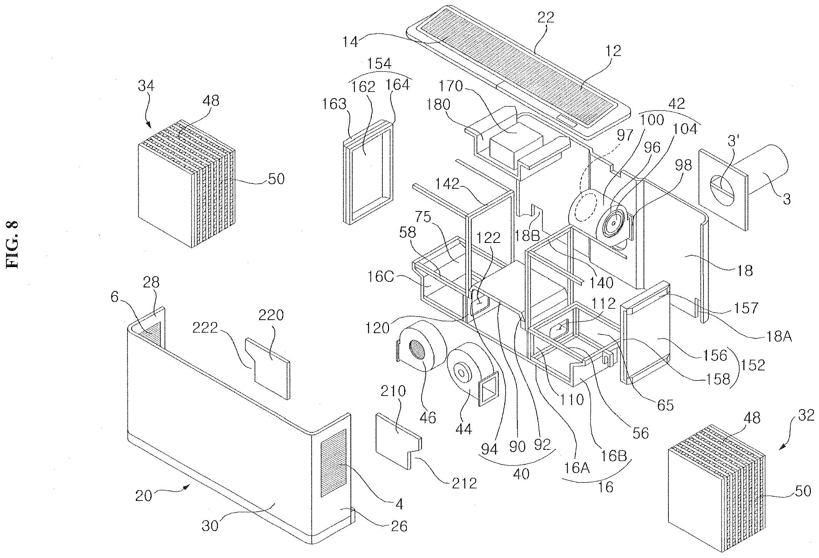

FIG. 8 is an exploded perspective view of the ventilation apparatus according to a third embodiment of the present invention.

The ventilation apparatus according to the third embodiment of the present invention may include a left service cover 210 covering the front side of the left outdoor air suction flow path 52 and a right service cover 220 covering the front side of the right outdoor air suction flow path 54.

The left service cover 210 may hermetically close the front side of the left outdoor air suction flow path 52. Supply of air blown from the left air supply fan 44 into the indoor area through the left outdoor air discharge hole 12 without passing through the left heat exchanger 32 can be minimized.

The left service cover 210 may be installed at a front side of the left supporter 56. The left service cover 210 may include a left lower evasion recess 212 formed at a left lower portion thereof to allow the left fixing member 23A to be fastened and separated without separating the left service cover 210.

The right service cover 220 may hermetically close the front side of the right outdoor air suction flow path 54. Supply of air blown from the right air supply fan 46 into the indoor area through the right outdoor air discharge hole 14 without passing through the right heat exchanger 34 can be minimized.

The right service cover 220 may be installed at a front side of the right supporter 58. The right service cover 220 may include a right lower evasion recess 222 formed at a right lower portion thereof to allow the right fixing member 23B to be fastened and separated without separating the right service cover 220.

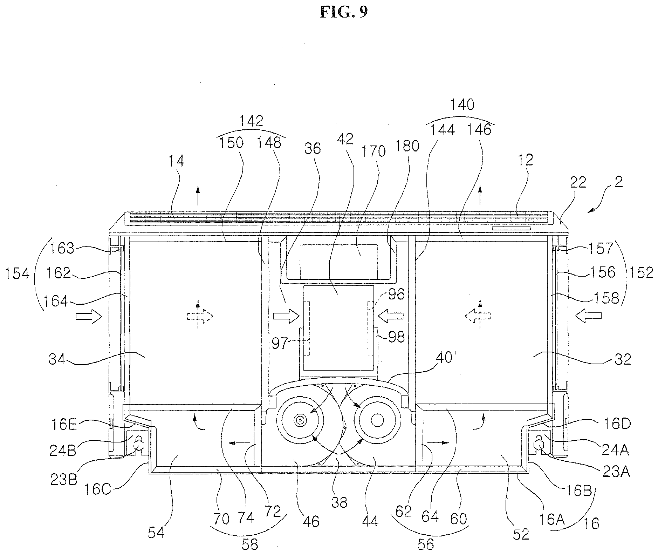

FIG. 9 is a front view showing the interior of the ventilation apparatus according to a fourth embodiment of the present invention.

In the ventilation apparatus according to the fourth embodiment of the present invention, a partition plate 40' is formed to be rounded, and the other configurations and operations than the partition plate 40' are the same or similar to those of the first embodiment of the present invention. Thus, the same reference numerals are used and a detailed description thereof will be omitted.

The partition plate 40' may be formed to have an upwardly convex shape. A left end of the partition plate 40' may be fixed to be in contact with at least one of the left heat exchanger holder 140, the left supporter 56, and the left air supply fan mounter 110. A right end of the partition plate 40' may be fixed to be in contact with at least one of the right heat exchanger holder 142, the right supporter 58, and the right air supply fan mounter 120.

While the present invention has been shown and described in connection with the embodiments, it will be apparent to those skilled in the art that modifications and variations can be made without departing from the scope of the invention as defined by the appended claims.

## Claims

1. A ventilation apparatus comprising:
a casing (2) having a left indoor air suction hole (4) formed on the left and a right indoor air suction hole (6) formed on the right, an indoor air discharge hole (8) and an outdoor air suction hole (10) formed at a rear side, and an outdoor air discharge hole formed at an upper side;
a left heat exchanger (32) for exchanging heat between indoor air and outdoor air installed on the left within the casing (2);
a right heat exchanger (34) for exchanging heat between indoor air and outdoor air installed on the right within the casing (2);
a partition plate (40) partitioning the internal left side and internal right side of the casing (2) into an indoor air exhaust chamber (36) and an outdoor air suction chamber (38);
an exhaust fan (42) disposed in the indoor air exhaust chamber (36);
a left air supply fan (44) disposed in the outdoor air suction chamber (38) and configured to blow outdoor air to the left heat exchanger (32); and
a right air supply fan (46) disposed in the outdoor air suction chamber (38) and configured to blow outdoor air to the right heat exchanger (34).

2. The ventilation apparatus of claim 1, wherein the left heat exchanger (32) and the right heat exchanger (34) have an indoor air flow path (50) allowing indoor air to pass therethrough in a horizontal direction and an outdoor air flow path (48) allowing outdoor air to be sucked to a lower face thereof so as to be discharged to an upper face thereof, respectively.

3. The ventilation apparatus of claim 2, wherein the left heat exchanger (32) and the right heat exchanger (34) have an outdoor air suction flow path between the left heat exchanger (32) and the right heat exchanger (34) and a lower plate (16A) of the casing (2).

4. The ventilation apparatus of claim 1, further comprising:
a left supporter (56) supporting the left heat exchanger (32) such that the left heat exchanger is separated from the lower plate (16A) of the casing (2); and
a right supporter (58) supporting the right heat exchanger (34) such that the right heat exchanger is separated from the lower plate (16A) of the casing (2).

5. The ventilation apparatus of claim 4, wherein the left supporter (56) and the right supporter (58) have an opening allowing outdoor air to pass therethrough, respectively.

6. The ventilation apparatus of claim 1, further comprising:
a left air supply fan mounter (100) on which the left air supply fan (44) is mounted; and
a right air supply fan mounter (120) on which the right air supply fan (46) is mounted.

7. The ventilation apparatus of claim 6, wherein the left air supply fan mounter (100) and the right air supply fan mounter (120) are vertically installed within the casing and have an opening allowing outdoor air to pass therethrough, respectively.

8. The ventilation apparatus of claim 1, wherein the left air supply fan (44) and the right air supply fan (46) are separately installed.

9. The ventilation apparatus of claim 1, wherein the left air supply fan (44) and the right air supply fan (46) include a fan housing (130), a blower (134) rotatably placed within the fan housing (130), and a motor (132) installed at the fan housing (130) and configured to rotate the blower (134), and
wherein the fan housing (130) is configured to suck outdoor air from front and rear faces thereof and has an air discharge hole (136) formed on a circumferential portion thereof.

10. The ventilation apparatus of claim 9, wherein the fan housing (130) of the left air supply fan (44) and that of the right air supply fan (46) have the same shape,
wherein the air discharge hole (136) of the fan housing (130) of the left air supply fan (44) is installed to discharge air to the left side, and
wherein the air discharge hole (136) of the fan housing (130) of the right air supply fan (46) is installed to discharge air to the right side.

11. The ventilation apparatus of claim 10, wherein the motor (132) of the fan housing (130) of the left air supply fan (44) is installed on one of the front and rear faces, and
the motor (132) of the fan housing (130) of the right air supply fan (46) is installed on the opposite side of the motor of the air supply fan (44).

12. The ventilation apparatus of claim 1, wherein the partition plate (40) comprises:
a horizontal plate placed between the left heat exchanger (32) and the right heat exchanger (34);
a left sloped plate (92) disposed to be sloped toward a lower end of the left heat exchanger (32) from the horizontal plate (90); and
a right sloped plate (94) disposed to be sloped toward a lower end of the right heat exchanger (34) from the horizontal plate (90).

13. The ventilation apparatus of claim 1, wherein the casing (2) includes a top cover (22) having a left outdoor air discharge hole formed at an upper side of the left heat exchanger (32) and a right outdoor air discharge hole formed at an upper side of the right heat exchanger (34),
wherein the exhaust fan includes air suction holes formed at both of left and right faces thereof and an air discharge hole (98) formed at a rear side thereof, and
wherein the control unit configured to control the ventilation apparatus is placed between the exhaust fan (42) and the top cover (22).

14. The ventilation apparatus of claim 13, further comprising a shielding member (180) preventing outdoor air discharged to an upper side of the left heat exchanger (32) and the right heat exchanger (34) from flowing backward to the exhaust fan.

15. The ventilation apparatus of claim 14, wherein the shielding member (180) includes a control unit accommodation portion (181) for accommodating the control unit (170).

## Patentansprüche

1. Belüftungsvorrichtung umfassend:
ein Gehäuse (2), das ein linkes Innenluftansaugloch (4), das auf der linken Seite ausgebildet ist, und ein rechtes Innenluftansaugloch (6), das auf der rechten Seite ausgebildet ist, ein Innenluftausstoßloch (8) und ein Außenluftansaugloch (10), die auf einer Rückseite ausgebildet sind, und ein Außenluftausstoßloch aufweist, das an einer Oberseite ausgebildet ist;
einen linken Wärmetauscher (32) zum Tauschen von Wärme zwischen der Innenluft und der Außenluft, der auf der linken Seite im Gehäuse (2) installiert ist;
einen rechten Wärmetauscher (34) zum Tauschen von Wärme zwischen der Innenluft und der Außenluft, der auf der rechten Seite im Gehäuse (2) installiert ist;
eine Trennplatte (40), die die innere linke Seite und innere rechte Seite des Gehäuses (2) in eine Innenluftauslasskammer (36) und eine Außenluftansaugkammer (38) unterteilt;
ein Auslassgebläse (42), das in der Innenluftauslasskammer (36) angeordnet ist;
ein linkes Luftzufuhrgebläse (44), das in der Außenluftansaugkammer (38) angeordnet und konfiguriert ist, Außenluft zum linken Wärmetauscher (32) zu blasen; und
ein rechtes Luftzufuhrgebläse (46), das in der Außenluftansaugkammer (38) angeordnet und konfiguriert ist, Außenluft zum rechten Wärmetauscher (34) zu blasen.

2. Belüftungsvorrichtung nach Anspruch 1, wobei der linke Wärmetauscher (32) und der rechte Wärmetauscher (34) einen Innenluftströmungsweg (50), der es ermöglicht, dass Innenluft dort hindurch in eine horizontale Richtung strömt und einen Außenluftströmungsweg (48) aufweisen, der es ermöglicht, dass Außenluft an dessen Unterseite angesaugt wird, um an dessen Oberseite ausgestoßen zu werden.

3. Belüftungsvorrichtung nach Anspruch 2, wobei der linke Wärmetauscher (32) und der rechte Wärmetauscher (34) einen Außenluftansaugströmungsweg zwischen dem linken Wärmetauscher (32) und dem rechten Wärmetauscher (34) und einer unteren Platte (16A) des Gehäuses (2) aufweisen.

4. Belüftungsvorrichtung nach Anspruch 1, die ferner aufweist:
einen linken Träger (56), der den linken Wärmetauscher (32) so hält, dass der linke Wärmetauscher von der unteren Platte (16A) des Gehäuses (2) getrennt ist; und
einen rechten Träger (58), der den rechten Wärmetauscher (34) so hält, dass der rechte Wärmetauscher von der unteren Platte (16A) des Gehäuses (2) getrennt ist.

5. Belüftungsvorrichtung nach Anspruch 4, wobei der linke Träger (56) und der rechte Träger (58) eine Öffnung aufweisen, die es ermöglicht, dass Außenluft dort hindurch geht.

6. Belüftungsvorrichtung nach Anspruch 1, die ferner aufweist:
eine linke Luftzufuhrgebläsebefestigung (100), an der das linke Luftzufuhrgebläse (44) befestigt ist; und
eine rechte Luftzufuhrgebläsebefestigung (120), an der das rechte Luftzufuhrgebläse (46) befestigt ist.

7. Belüftungsvorrichtung nach Anspruch 6, wobei die linke Luftzufuhrgebläsebefestigung (100) und die rechte Luftzufuhrgebläsebefestigung (120) vertikal im Gehäuse installiert sind und eine Öffnung aufweisen, die es ermöglicht, dass Außenluft dort hindurch geht.

8. Belüftungsvorrichtung nach Anspruch 1, wobei das linke Luftzufuhrgebläse (44) und das rechte Luftzufuhrgebläse (46) getrennt installiert sind.

9. Belüftungsvorrichtung nach Anspruch 1, wobei das linke Luftzufuhrgebläse (44) und das rechte Luftzufuhrgebläse (46) ein Gebläsegehäuse (130), ein Laufrad (134), das drehbar im Gebläsegehäuse (130) angeordnet ist, und einen Motor (132) aufweisen, der am Gebläsegehäuse (130) installiert und konfiguriert ist, das Laufrad (134) zu drehen, und
wobei das Gebläsegehäuse (130) konfiguriert ist, Außenluft von seiner Vorder- und Rückseite anzusaugen, und ein Luftausstoßloch (136) aufweist, das an dessen Umfangsabschnitt ausgebildet ist.

10. Belüftungsvorrichtung nach Anspruch 9, wobei das Gebläsegehäuse (130) des linken Luftzufuhrgebläses (44) und das des rechten Luftzufuhrgebläses (46) dieselbe Form aufweisen,
wobei des Luftausstoßloch (136) des Gebläsegehäuses (130) des linken Luftzufuhrgebläses (44) so installiert ist, dass es Luft zur linken Seite ausstößt, und
wobei das Luftausstoßloch (136) des Gebläsegehäuses (130) des rechten Luftzufuhrgebläses (46) so installiert ist, dass es Luft zur rechten Seite ausstößt.

11. Belüftungsvorrichtung nach Anspruch 10, wobei der Motor (132) des Gebläsegehäuses (130) des linken Luftzufuhrgebläses (44) auf der Vorder- oder Rückseite installiert ist, und
der Motor (132) des Gebläsegehäuses (130) des rechten Luftzufuhrgebläses (46) auf der gegenüberliegenden Seite des Motors des Luftzufuhrgebläses (44) installiert ist.

12. Belüftungsvorrichtung nach Anspruch 1, wobei die Trennplatte (40) aufweist:
eine horizontale Platte, die zwischen dem linken Wärmetauscher (32) und dem rechten Wärmetauscher (34) angeordnet ist;
eine linke geneigte Platte (92), die so angeordnet ist, dass sie von der horizontalen Platte (90) zu einem unteren Ende des linken Wärmetauschers (32) geneigt ist; und
eine rechte geneigte Platte (94), die so angeordnet ist, dass sie von der horizontalen Platte (90) zu einem unteren Ende des rechten Wärmetauschers (34) geneigt ist.

13. Belüftungsvorrichtung nach Anspruch 1, wobei das Gehäuse (2) eine obere Abdeckung (22) aufweist, das ein linkes Außenluftausstoßloch, das an einer Oberseite des linken Wärmetauschers (32) ausgebildet ist, und ein rechtes Außenluftausstoßloch aufweist, das an einer Oberseite des rechten Wärmetauschers (34) ausgebildet ist,
wobei das Auslassgebläse Luftansauglöcher, die sowohl auf dessen linker und rechter Seite ausgebildet sind, und ein Luftausstoßloch (98) aufweist, das auf dessen Rückseite ausgebildet ist, und
wobei die Steuereinheit, die konfiguriert ist, die Belüftungsvorrichtung zu steuern, zwischen dem Auslassgebläse (42) und der oberen Abdeckung (22) angeordnet ist.

14. Belüftungsvorrichtung nach Anspruch 13, die ferner ein Abschirmelement (180) aufweist, das verhindert, dass zu einer Oberseite des linken Wärmetauschers (32) und des rechten Wärmetauschers (34) ausgestoßene Außenluft zum Auslassgebläse zurück strömt.

15. Belüftungsvorrichtung nach Anspruch 14, wobei das Abschirmelement (180) einen Steuereinheitsaufnahmeabschnitt (181) zum Aufnehmen der Steuereinheit (170) aufweist.

## Revendications

1. Appareil de ventilation, comprenant :
un boîtier (2) présentant un trou d'aspiration d'air intérieur gauche (4) sur la gauche et un trou d'aspiration d'air intérieur droit (6) sur la droite, un trou d'évacuation d'air intérieur (8) et un trou d'aspiration d'air extérieur (10) sur un côté arrière, et un trou d'évacuation d'air extérieur sur un côté supérieur ;
un échangeur de chaleur gauche (32) destiné à échanger de la chaleur entre l'air intérieur et l'air extérieur, monté à gauche à l'intérieur du boîtier (2) ;
un échangeur de chaleur droit (34) destiné à échanger de la chaleur entre l'air intérieur et l'air extérieur, monté à droite à l'intérieur du boîtier (2) ;
une plaque de séparation (40) séparant le côté intérieur gauche et le côté intérieur droit du boîtier (2) en un compartiment d'extraction d'air intérieur (36) et un compartiment d'aspiration d'air extérieur (38) ;
un ventilateur extracteur (42) disposé dans le compartiment d'extraction d'air intérieur (36) ;
un ventilateur de refoulement gauche (44) disposé dans le compartiment d'aspiration d'air extérieur (38) et prévu pour souffler de l'air extérieur vers l'échangeur de chaleur gauche (32) ; et
un ventilateur de refoulement droit (46) disposé dans le compartiment d'aspiration d'air extérieur (38) et prévu pour souffler de l'air extérieur vers l'échangeur de chaleur droit (34).

2. Appareil de ventilation selon la revendication 1, où l'échangeur de chaleur gauche (32) et l'échangeur de chaleur droit (34) ont chacun un conduit d'écoulement d'air intérieur (50) permettant le passage de l'air intérieur dans une direction horizontale, et un conduit d'écoulement d'air extérieur (48) permettant l'aspiration de l'air extérieur vers une face inférieure de celui-ci pour être évacué vers une face supérieure de celui-ci.

3. Appareil de ventilation selon la revendication 2, où l'échangeur de chaleur gauche (32) et l'échangeur de chaleur droit (34) ont un conduit d'écoulement d'aspiration d'air extérieur entre l'échangeur de chaleur gauche (32) et l'échangeur de chaleur droit (34) et une plaque inférieure (16A) du boîtier (2).

4. Appareil de ventilation selon la revendication 1, comprenant en outre :
un support gauche (56) supportant l'échangeur de chaleur gauche (32) de manière à séparer l'échangeur de chaleur gauche de la plaque inférieure (16A) du boîtier (2) ; et
un support droit (58) supportant l'échangeur de chaleur droit (34) de manière à séparer l'échangeur de chaleur droit de la plaque inférieure (16A) du boîtier (2).

5. Appareil de ventilation selon la revendication 4, où le support gauche (56) et le support droit (58) ont chacun une ouverture permettant le passage de l'air extérieur.

6. Appareil de ventilation selon la revendication 1, comprenant en outre :
un élément de montage (100) de ventilateur de refoulement gauche sur lequel est monté le ventilateur de refoulement gauche (44); et
un élément de montage (120) de ventilateur de refoulement droit sur lequel est monté le ventilateur de refoulement droit (46).

7. Appareil de ventilation selon la revendication 6, où l'élément de montage (100) de ventilateur de refoulement gauche et l'élément de montage (120) de ventilateur de refoulement droit sont disposés verticalement à l'intérieur du boîtier et ont chacun une ouverture permettant le passage de l'air extérieur.

8. Appareil de ventilation selon la revendication 1, où le ventilateur de refoulement gauche (44) et le ventilateur de refoulement droit (46) sont disposés séparément.

9. Appareil de ventilation selon la revendication 1, où le ventilateur de refoulement gauche (44) et le ventilateur de refoulement droit (46) comprennent un carter de ventilateur (130), une soufflante (134) montée de manière rotative à l'intérieur du carter de ventilateur (130), et un moteur (132) monté sur le carter de ventilateur (130) et prévu pour entraîner la soufflante (134) en rotation, et
où le carter de ventilateur (130) est prévu pour aspirer de l'air extérieur par ses faces avant et arrière, et présente un trou d'évacuation d'air (136) formé sur une partie circonférentielle.

10. Appareil de ventilation selon la revendication 9, où le carter (130) du ventilateur de refoulement gauche (44) et celui du ventilateur de refoulement droit (46) ont une forme identique,
où le trou d'évacuation d'air (136) du carter (130) du ventilateur de refoulement gauche (44) est prévu pour évacuer de l'air sur le côté gauche, et
où le trou d'évacuation d'air (136) du carter (130) du ventilateur de refoulement droit (46) est prévu pour évacuer de l'air sur le côté droit.

11. Appareil de ventilation selon la revendication 10, où le moteur (132) du carter (130) du ventilateur de refoulement gauche (44) est monté sur la face avant ou la face arrière, et le moteur (132) du carter (130) du ventilateur de refoulement droit (46) est monté sur le côté opposé du moteur du ventilateur de refoulement (44).

12. Appareil de ventilation selon la revendication 1, où la plaque de séparation (40) comprend :
une plaque horizontale disposée entre l'échangeur de chaleur gauche (32) et l'échangeur de chaleur droit (34) ;
une plaque inclinée gauche (92) disposée de manière à être inclinée vers une extrémité inférieure de l'échangeur de chaleur gauche (32) depuis la plaque horizontale (90) ; et
une plaque inclinée droite (94) disposée de manière à être inclinée vers une extrémité inférieure de l'échangeur de chaleur droit (34) depuis la plaque horizontale (90).

13. Appareil de ventilation selon la revendication 1, où le boîtier (2) comprend un couvercle supérieur (22) ayant un trou d'évacuation d'air extérieur gauche formé sur un côté supérieur de l'échangeur de chaleur gauche (32) et un trou d'évacuation d'air extérieur droit formé sur un côté supérieur de l'échangeur de chaleur droit (34),
où le ventilateur extracteur comporte des trous d'aspiration d'air formés sur sa face gauche et se face droite, et un trou d'évacuation d'air (98) formé sur un côté arrière, et
où l'unité de commande prévue pour commander l'appareil de ventilation est disposée entre le ventilateur extracteur (42) et le couvercle supérieur (22).

14. Appareil de ventilation selon la revendication 13, comprenant en outre un élément de protection (180) empêchant l'air extérieur évacué vers un côté supérieur de l'échangeur de chaleur gauche (32) et de l'échangeur de chaleur droit (34) de retourner vers le ventilateur extracteur.

15. Appareil de ventilation selon la revendication 14, où l'élément de protection (180) comprend une section de logement (181) d'unité de commande pour loger l'unité de commande (170).
